# FASCICULE DE BREVET EUROPEEN

(11) **EP 0 814 976 B1**
(45) Date de publication et mention de la délivrance du brevet: **31.10.2001**
(21) Numéro de dépôt: 96911013.9
(22) Date de dépôt: 01.04.1996
(51) Int. Cl.: B60R 21/00

(54) **DISPOSITIF DE SECURITE D'UN VEHICULE**
SICHERHEITSVORRICHTUNG EINES KRAFTFAHRZEUGES
VEHICLE SAFETY DEVICE

(30) Priorité: 31.03.1995 FR 9503856
(43) Date de publication de la demande: 07.01.1998
(73) Titulaire: DAVEY BICKFORD, 76006 Rouen Cédex (FR)
(72) Inventeur: PATHE, Claude, F-89950 Héry (FR); TROUSSELE, Rapha[l, F-89000 Auxerre (FR)
(74) Mandataire: Michelet, Alain
(86) Numéro de dépôt international: FR9600491
(87) Numéro de publication internationale: WO9630231

(56) Documents cités:
- EP-A- 0 027 747
- EP-A- 0 649 776
- EP-A- 0 649 777
- WO-A-88/05390
- WO-A-89/09146
- VEHICLE ELECTRONICS IN THE 90'S, DEARBORN, OCT. 15 - 17, 1990, no. -, 1 Octobre 1990, INSTITUTE OF ELECTRICAL AND ELECTRONICS ENGINEERS, pages 187-193, XP000223543 HAERTL A ET AL: "AIRBAG SYSTEMS - THEIR PERMANENT MONITORING AND ITS MEANING TO THE USER"
- VEHICLE ELECTRONICS IN THE 90'S, DEARBORN, OCT. 15 - 17, 1990, no. -, 1 Octobre 1990, INSTITUTE OF ELECTRICAL AND ELECTRONICS ENGINEERS, pages 23-43, XP000223534 GOCH S ET AL: "INFLATABLE RESTRAINT SYSTEM DESIGN CONSIDERATIONS"

## Description

L'invention concerne un dispositif de sécurité d'un véhicule.

Les dispositifs de sécurité pyrotechniques utilisés dans des automobiles consistent habituellement en des circuits de sécurité composés d'une source d'alimentation électrique délivrant une certaine tension aux bornes d'un initiateur pyrotechnique connecté en série avec un ou plusieurs capteurs d'accélération. L'initiateur ayant une résistance interne fixée, les capteurs sont généralement shuntés par une résistance ayant une valeur nominale supérieure à celle de la résistance interne de l'initiateur. De cette façon, l'initiateur est parcouru par un courant de faible valeur, insuffisant pour provoquer son déclenchement. Lorsqu'une collision ou une décélération importante du véhicule est détectée, un ou plusieurs capteurs se ferment successivement, entraînant une forte augmentation du courant passant dans l'initiateur. Le mécanisme est alors mis à feu, activant un mécanisme qui lui est associé. Le mécanisme consiste typiquement en un coussin gonflable de sécurité.

Un inconvénient majeur de ces dispositifs de sécurité est qu'ils sont conçus pour recueillir des informations de capteurs d'accélération seulement. D'autres paramètres importants, tels que la vitesse du véhicule ou le niveau de freinage, ne sont pas pris en compte.

Un autre inconvénient de ces dispositifs est qu'ils ne mémorisent pas d'informations relatives à des conditions de déroulement d'un trajet. Ils ne peuvent donc pas faire office de boîte noire en cas d'accident, ni diagnostiquer avec précision l'origine d'une panne.

De plus, ces dispositifs imposent un déclenchement simultané de l'ensemble des systèmes de sécurité prévus dans un véhicule.

D'autre part, le fonctionnement correct d'éléments du dispositif est vérifié en s'assurant d'une continuité électrique. Cette méthode, utilisable pour des éléments résistifs, n'est pas appropriée à la présence d'éléments semi-conducteurs. Il n'est donc pas possible d'intégrer des initiateurs pyrotechniques bâtis autour de ponts semi-conducteurs.

Un autre inconvénient apparaît lors d'une défaillance d'un des capteurs associé à un initiateur. Habituellement, des informations cohérentes de deux capteurs d'accélération détectant une décélération importante du véhicule provoquent une mise à feu de l'initiateur. Si l'un des deux capteurs se ferme et pas l'autre, le dispositif de sécurité est désactivé. De cette façon, si un passager reste à l'abri d'un déclenchement prématuré ou intempestif de systèmes de sécurité, sa sécurité n'est plus garantie en cas de choc.

Egalement, les dispositifs existants nécessitent de figer au départ les éléments qui y sont inclus. Les capteurs et les initiateurs présents dans le dispositif doivent être prédéterminés en type et en nombre. Il est donc difficile de les intégrer dans des véhicules différents correspondant à des moyens de mesure et à des mécanismes de sécurité distincts.

Un autre inconvénient apparaît en présence d'un ou de plusieurs initiateurs bâtis autour de ponts semi-conducteurs. En effet, il est essentiel de pouvoir vérifier périodiquement leur fonctionnalité. Or, ceci est habituellement effectué d'une façon indirecte. Un voile, typiquement en tungstène, est déposé sur le pont semi-conducteur, et on en contrôle l'état. Ce procédé indirect s'avère à la fois peu pratique et moyennement fiable.

Correspondant aux caractéristiques du préambule de la revendication 1, le document EP-A-0.027.747 décrit un système embarqué sur véhicule constitué par un ensemble de capteurs accélérométriques, un microcalculateur et un ensemble de moyens relatifs à la sécurité des passagers. Les capteurs renseignent le calculateur sur les niveaux accélérométriques en différents points de la structure du véhicule. Le calculateur traite ces informations, contrôle l'état de marche des capteurs, de l'alimentation électrique et des dispositifs de sécurité. En cas de choc grave, le calculateur commande le déclenchement des dispositifs de sécurité adaptés à la situation: décondamnation électromagnétique des portes, ceintures à rétraction pyrotechnique, sacs gonflables et larguage des ceintures.

Le but de l'invention est de remédier à ces différents inconvénients.

En particulier, l'invention a pour objet un dispositif de sécurité avec une architecture modulaire, permettant de modifier simplement ses éléments.

Un autre objet de l'invention est de conserver des informations sur des conditions d'un trajet, de façon à faire office de boîte noire et de boîte de diagnostic.

L'invention a également pour but de pouvoir intégrer des initiateurs pyrotechniques bâtis autour de ponts semi-conducteurs, tout en contrôlant périodiquement l'état de marche de façon simple et avec une grande fiabilité.

Un autre objectif de l'invention est de pouvoir séquencer précisément des déclenchements successifs de plusieurs systèmes de sécurité.

L'invention vise également une validation systématique d'un ordre de mise en action d'un mécanisme de sécurité.

A cette fin, l'invention propose un dispositif de sécurité d'un véhicule selon les caractéristiques de la revendication 1.

Ce dispositif comprend
- des systèmes de détection, donnant des informations sur des conditions d'un trajet du véhicule, ces systèmes de détection présentant un premier état, correspondant à des conditions normales du trajet, et un second état, correspondant à un risque pour au moins un passager du véhicule,
- des mécanismes pouvant être activés pour assurer la sécurité de ce passager,
- des systèmes de sécurité capables d'activer ces mécanismes, certains au moins de ces systèmes de sécurité comportant des initiateurs pyrotechniques,
- une source d'alimentation électrique,
- un circuit électrique alimenté par la source et relié aux systèmes de détection et de sécurité tel que lorsque certains des systèmes de détection passent du premier au second état, ils déclenchent les systèmes de sécurité, ces derniers activant alors les mécanismes,
- une unité de traitement reliée aux systèmes de détection et de sécurité par une interface de communication, l'unité de traitement analysant des signaux d'informations en provenance des systèmes de détection et générant des signaux de commande en direction des systèmes de sécurité
- un micro-générateur d'impulsions permettant de générer dans le circuit des impulsions électriques précisément calibrées en temps et en amplitude, ces impulsions permettant de vérifier la fonctionnalité des initiateurs pyrotechniques,
- l'un au moins des initiateurs comprenant avantageusement un pont semi-conducteur, le pont étant isolant lorsqu'une tension appliquée est inférieure à une valeur passante et conducteur si la tension est supérieure à cette valeur, l'initiateur étant déclenché lorsqu'il reçoit une énergie ayant une valeur supérieure à un seuil de fonctionnement, le micro-générateur d'impulsions envoyant dans l'initiateur des impulsions en tension ayant une amplitude au moins égale à la valeur passante, et une durée correspondant à une énergie inférieure au seuil de fonctionnement.

Cette configuration permet une grande souplesse de conception et d'utilisation. Un même dispositif de sécurité peut ainsi faire l'objet de programmations distinctes, pour être intégré dans des véhicules équipés différemment. Des interventions isolées sur certains éléments sont particulièrement simples. D'autre part, il est aisé de faire évoluer le contenu du dispositif.

Dans un mode de réalisation préféré de l'invention, l'unité de traitement comporte une mémoire non volatile. Celle-ci permet d'enregistrer périodiquement des informations sur la fonctionnalité d'éléments du dispositif de sécurité.

La mémoire non volatile intégrée permet de stocker des informations obtenues lors de précédents contrôle de fonctionnalité du dispositif. Ces informations étant récupérables en cas de panne ou d'accident, la mémoire non volatile fait donc office de boîte noire et de boîte de diagnostic.

De cette manière, le dispositif de sécurité selon l'invention permet de vérifier plusieurs types d'initiateur fonctionnant avec des technologies très différentes. Les impulsions de courant ou de tension délivrées par le micro-générateur permettent en effet des mesures tant pour des initiateurs utilisant un fil résistif ou un pont résistif avec couche mince que pour d'autres utilisant un pont semi-conducteur.

Les mécanismes du dispositif de sécurité selon l'invention appartiennent de préférence à un ensemble comprenant des coussins gonflables de sécurité frontaux et latéraux, des prétensionneurs de ceinture de sécurité, capables de provoquer une traction des ceintures, des dispositifs de verrouillage et de déverrouillage de portes du véhicule, un coupe-batterie, et un extincteur.

Les systèmes de détection du dispositif de sécurité selon l'invention appartiennent de préférence à un ensemble comprenant des accéléromètres, un compteur de vitesse, des capteurs tactiles, des indicateurs de freinage, des détecteurs d'incendie et des capteurs indiquant la présence de passagers.

Dans un mode préféré de mise en oeuvre de l'invention, le dispositif de sécurité comprend un capteur d'accélération redondant avec les systèmes de détection. Ce capteur d'accélération est relié à l'unité de traitement et peut confirmer un risque décelé par un au moins des systèmes de détection.

Ce capteur d'accélération est avantageusement tridirectionnel.

Le capteur d'accélération intégré confirme des signaux provenant d'autres capteurs d'accélération du véhicule. Un ordre de déclenchement d'un mécanisme est ainsi validé par deux sources.

Le dispositif selon l'invention comprend avantageusement des moyens permettant de détecter des chocs frontaux et latéraux.

Il est judicieux que l'unité de traitement comprenne une horloge interne, permettant de vérifier périodiquement les conditions du trajet et de séquencer des déclenchements successifs des systèmes de sécurité.

Ce moyen est particulièrement approprié à l'architecture modulaire du dispositif de sécurité selon l'invention.

D'autres avantages ressortiront de l'invention, qui sera mieux comprise à l'aide de la description donnée ci-dessous d'un exemple particulier de réalisation, décrit à titre non limitatif en référence au dessin annexé, sur lequel:

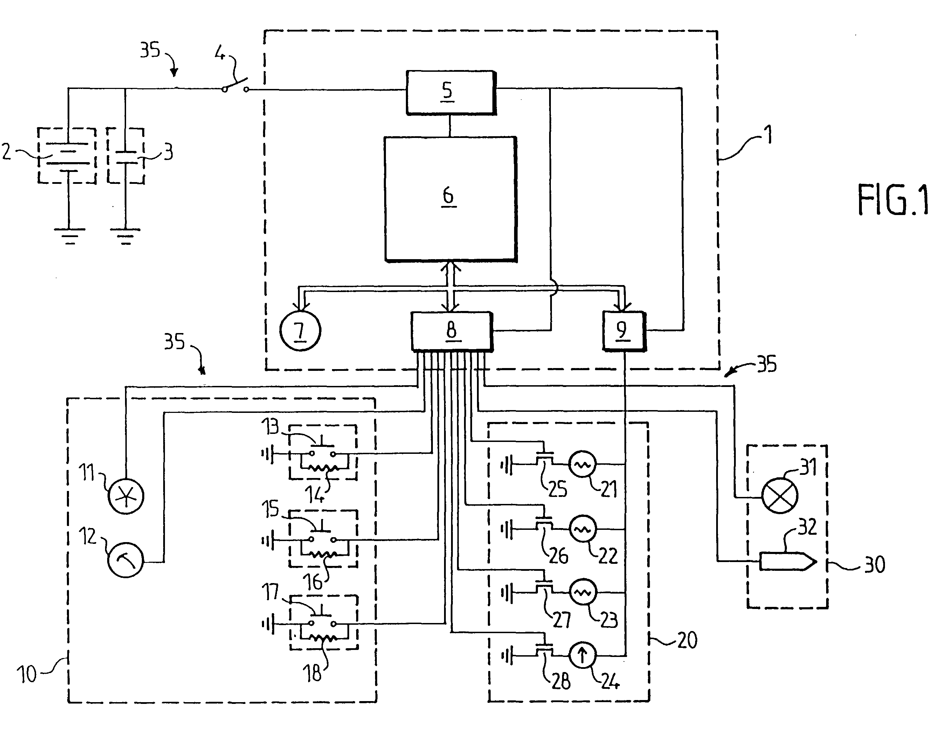

La Figure 1 est un schéma synoptique d'un dispositif de sécurité conforme à l'invention.

Dans l'exemple de réalisation décrit, le dispositif de sécurité selon l'invention comprend une source d'énergie 2 alimentant un circuit 35 s'étendant dans l'ensemble du dispositif. La source d'énergie 2 est typiquement une batterie d'un véhicule automobile. Elle est associée en parallèle avec un réservoir d'énergie 3 destiné à pallier une défaillance de cette source d'énergie 2 en cas de choc.

Le dispositif de sécurité comprend également un module de gestion 1 permettant d'analyser des informations sur des conditions d'un trajet et de commander des mécanismes de sécurité. La source d'énergie 2 est séparée du module de gestion 1 par un interrupteur de contact 4, qui permet de mettre le dispositif sous tension, ou hors tension. Le module de gestion 1 est de préférence inclus dans un circuit intégré.

Le module de gestion 1 est composé d'un module d'alimentation 5, d'une unité de traitement 6, d'un micro-générateur d'impulsions 9, d'un capteur d'accélération 7 intégré et d'une interface de communication 8.

Le module d'alimentation 5 est destiné à fournir une tension continue au reste du dispositif, à partir d'une tension délivrée par la source d'énergie 2. Il est associé à un régulateur (non représenté).

L'unité de traitement 6 est quant à elle bâtie autour d'une mémoire non volatile et d'un micro-processeur. Elle permet de recevoir et d'analyser des signaux représentatifs des conditions d'un trajet, et d'envoyer des signaux de commande destinés à activer des mécanismes de sécurité. Grâce à sa mémoire non volatile, l'unité logique 6 a également pour fonction de stocker des informations relatives au trajet. L'unité de traitement 6 comporte également une horloge interne, qui permet de vérifier périodiquement les conditions du trajet. L'horloge interne assure également une succession chronométrée des déclenchements de systèmes de sécurité actionnant des mécanismes.

Le capteur d'accélération intégré 7 est construit par exemple autour d'un élément piézoélectrique fournissant à l'unité logique 6 un signal en relation avec une accélération du véhicule. Ce capteur 7 est tridirectionnel, de façon à pouvoir confirmer une détection d'une collision frontale ou latérale par un autre capteur d'accélération. A cet effet, le capteur 7 a un seuil de déclenchement légèrement supérieur à celui des autres capteurs. Bien qu'un capteur bidirectionnel soit susceptible de suffire pour détecter des chocs frontaux et latéraux, l'utilisation du capteur 7 tridirectionnel apporte une plus grande fiabilité.

Le micro-générateur d'impulsions 9 permet de générer des impulsions électriques précisément calibrées en temps et en amplitude, servant à mesurer des résistances de circuits conducteurs ou semi-conducteurs intégrés dans des initiateurs pyrotechniques du dispositif de sécurité.

L'interface de communication 8 permet au module de gestion 1 de recevoir toute information relative à des conditions du trajet, et de transmettre des commandes à des mécanismes de sécurité. L'interface de communication 8 permet également de délivrer des informations à destination d'un utilisateur.

Un sous-ensemble d'information 10 rassemble toutes sources d'information nécessaires à un fonctionnement du module de gestion 1. Le circuit 35 relie les éléments du sous-ensemble d'information 10 à l'interface de communication 8.

Le sous-ensemble 10 comprend un compteur de vitesse 11, un indicateur de freinage 12, un capteur 13 destiné à détecter la présence d'un passager, un accéléromètre 15 destiné à détecter un choc frontal et un capteur tactile 17 apte à détecter une collision latérale. Des résistances 14, 16 et 18 sont montées en parallèle respectivement sur les capteurs 13, 15 et 17. Les capteurs 13, 15 et 17 ont une position ouverte et une position fermée. En position ouverte, un courant y circule par les résistances 14, 16 et 18. En position fermée, les capteurs 13, 15 et 17 présentent une résistance sensiblement moindre. Leur fermeture provoque donc une augmentation sensible d'un courant circulant dans le circuit 35. Cette fermeture est produite automatiquement en présence d'un passager avant pour le capteur 13, d'un choc frontal pour l'accéléromètre 15, et d'une collision latérale pour le capteur tactile 17.

Le sous-ensemble d'information 10 constitue ainsi une interface d'entrée du module de gestion 1.

Un sous-ensemble d'actionnement 20 rassemblant tous éléments destinés à être actionnés par le module de gestion 1, en fonction de signaux envoyés par le sous-ensemble d'information 10, constitue une interface de sortie du module de gestion 1. Il comprend trois initiateurs pyrotechniques 21, 22 et 23 associés respectivement à des prétensionneurs de ceinture de sécurité, des coussins gonflables frontaux et des coussins gonflables latéraux. Ces initiateurs 21, 22, 23 sont bâtis autour de ponts résistifs ou semi-conducteurs. Le sous-ensemble 20 comporte également un dispositif 24 de déverrouillage de portes du véhicule. Les initiateurs 21, 22, 23 et le dispositif 24 constituent des systèmes de sécurité reliés au circuit 35 par respectivement des transistors 25, 26, 27 et 28. Ces transistors 25, 26, 27, 28 peuvent être en position ouverte ou fermée. En position ouverte, un courant circulant dans le circuit 35 ne parvient pas aux éléments 21, 22, 23, 24. En position fermée, le courant y circule et est apte à les déclencher. La fermeture des transistors 25, 26, 27, 28 est commandée par l'unité de traitement 6 par l'intermédiaire de l'interface de communication 8.

Les initiateurs 21, 22, 23, et le dispositif 24 sont également reliés au micro-générateur d'impulsions 9, qui contrôle périodiquement leur fonctionnalité.

Le dispositif de sécurité comprend également un sous-ensemble d'interface 30 communiquant des informations à un utilisateur. Ce sous-ensemble d'interface 30 est relié à l'interface de communication 8 du module de gestion 1 par des connexions du circuit 35. Il comprend une lampe-témoin 31 disposée sur le tableau de bord du véhicule et une interface de lecture 32 destinée à lire des informations stockées en mémoire dans l'unité de traitement 6. La lampe-témoin 31 a pour fonction de signaler une défaillance d'un des capteurs. L'interface 32 rend possible une expertise en cas d'accident ou pour une intervention de contrôle, remplissant ainsi une fonction de boîte noire ou de diagnostic.

Avant une implantation du module de gestion 1 dans un véhicule, l'unité de traitement 6 est programmée en usine selon la configuration de ce véhicule. Elle contient alors différents paramètres nécessaires à son fonctionnement. Ces différents paramètres peuvent être par exemple des valeurs de seuil de fermeture des capteurs 13, 15 et 17, des valeurs de résistance des initiateurs 21, 22, 23 et du dispositif 24, des valeurs d'impulsions électriques nécessaires à des tests de fonctionnement de ces derniers, ou encore des valeurs de tensions de référence en différents points de mesure du circuit 35.

En fonctionnement normal, l'interrupteur de contact 4 est fermé au moment d'une mise en marche du véhicule, mettant le dispositif de sécurité sous tension. La présence d'un ou plusieurs passagers avant provoque la fermeture du capteur 13, qui entraîne une augmentation d'un courant circulant dans le circuit 35. Le module de gestion 1 détecte et interprète cette augmentation de courant, dépendant de la valeur de la résistance 14.

Périodiquement, le module de gestion 1 teste l'état des initiateurs 21, 22, 23 et du dispositif 24, grâce au micro-générateur d'impulsions 9. Selon qu'il vérifie la fonctionnalité d'un élément résistif ou semi-conducteur, le module de gestion 1 procède différemment.

Un contrôle d'un élément résistif, ayant une valeur fixée de non-fonctionnement, est effectué en appliquant à ses bornes une tension calibrée par le micro-générateur 9, de façon à ce qu'une intensité traversant cet élément résistif reste inférieure à sa valeur de non-fonctionnement. La mesure de l'intensité générée permet d'en déduire la résistance de l'élément résistif, qui est comparée avec sa valeur de référence stockée dans la mémoire de l'unité de traitement 6.

Dans le cas d'un élément semi-conducteur, celui-ci est isolant lorsqu'une tension appliquée est inférieure à une valeur passante, et conducteur si la tension est supérieure à cette valeur. D'autre part, le déclenchement d'un système de sécurité associé à cet élément semi-conducteur est provoqué par la réception d'une énergie ayant une valeur supérieure à un seuil de fonctionnement fixé. Lors de contrôles, le micro-générateur 9 envoie une impulsion en tension d'une valeur égale ou supérieure à la valeur passante de l'élément semi-conducteur, ayant une durée suffisamment faible pour que le seuil de fonctionnement de l'élément semi-conducteur ne soit pas atteint. Le module de gestion 1 en déduit la résistance de cet élément, qu'il compare avec une valeur de référence. La durée d'une impulsion, dépendant de la nature de l'élément semi-conducteur, est typiquement de l'ordre de quelques dizaines de nanosecondes.

Ce dernier procédé de mesure permet de tester de façon efficace des semi-conducteurs, sans risquer de déclencher de façon intempestive un système de sécurité. On évite ainsi une mise à feu d'un initiateur pyrotechnique bâti autour d'un pont semi-conducteur, tout en en vérifiant le bon état.

Des contrôles sont typiquement effectués toute les 100 millisecondes.

Les derniers résultats des contrôles sont stockés dans la mémoire non volatile de l'unité de traitement 6. Plusieurs dizaines d'instants de tests peuvent par exemple être conservés, les premiers enregistrements étant effacés à mesure que de nouveaux sont effectués.

Le module de gestion enregistre également de façon périodique la vitesse du véhicule mesurée par le compteur de vitesse 11, et l'état de freinage mesuré par l'indicateur de freinage 12.

De cette manière, l'unité de traitement 6 contient en permanence des conditions de déroulement du trajet lors des derniers instants.

A la suite d'un choc frontal ou d'une forte décélération, l'accéléromètre 15 se ferme. Le module de gestion 1 détecte alors une augmentation sensible du courant circulant dans le circuit 35. Celle-ci n'est cependant interprétée comme représentative d'une collision frontale que si le capteur d'accélération intégré 7 se ferme à son tour. En cas de défaillance du capteur 7, le module de gestion 1 est apte à analyser les informations provenant du compteur de vitesse 11 pour calculer une décélération représentative d'une collision. Si la fermeture de l'accéléromètre 15 n'est pas confirmée par les informations provenant du capteur 7 ou du compteur de vitesse 11, elle est interprétée comme une défaillance du capteur 15. Le module de gestion 1 allume alors la lampe-témoin 31. Les tests stockés dans l'unité de traitement 6 peuvent ensuite être consultés grâce à l'interface de lecture 32, afin d'établir un diagnostic.

En revanche, si les informations provenant de l'accéléromètre 15 sont confirmées par le capteur 7 ou le compteur de vitesse 11, le module de gestion 1 commande aussitôt la fermeture des transistors 25 et 26, provoquant respectivement une mise à feu des initiateurs pyrotechniques 21 et 22. Ce déclenchement des initiateurs 21 et 22 entraîne une traction de ceinture de sécurité et l'ouverture de coussins gonflables frontaux. Un court instant plus tard, déterminé par l'horloge interne de l'unité de traitement 6, le transistor 28 est fermé à son tour, déclenchant un déverrouillage des portes.

De façon similaire, la fermeture du capteur 17, symptomatique d'une collision latérale, doit être confirmée par le capteur d'accélération 7. Si tel est le cas, le module de gestion 1 commande la fermeture des transistors 25 et 27. Ce dernier provoque le gonflement de coussins gonflables latéraux. Le transistor 28 est fermé un court instant plus tard, comme pour un choc frontal.

A la suite d'un accident, les informations enregistrées dans la mémoire non volatile de l'unité de traitement 6 peuvent être lues grâce à l'interface 32. Le module de gestion 1 joue ainsi un rôle de boîte noire. Eventuellement, ces informations peuvent être codées, de façon à limiter leur accès à des personnes autorisées.

La modularité et la grande souplesse d'utilisation du dispositif de sécurité permettent d'envisager, sans difficulté, l'utilisation d'autres capteurs. Ainsi, il est possible de rajouter aux capteurs 13, 15 et 17 d'autres capteurs du même type. Plusieurs capteurs 13 peuvent par exemple indiquer individuellement la présence de passagers dans le véhicule. D'autres types de capteurs peuvent également être rajoutés aux précédents, tels qu'un détecteur d'incendie.

De même, il est possible de prévoir d'autres mécanismes que ceux décrits précédemment à titre d'exemple. Des mécanismes de même types que ceux décrits peuvent être rajoutés pour individualiser leurs effets. Par exemple, plusieurs initiateurs peuvent être prévus pour des coussins gonflables frontaux distincts. D'autres mécanismes de sécurité peuvent s'avérer judicieux. En particulier, un coupe-batterie, un extincteur, ou un dispositif de verrouillage des portes du véhicule peuvent être intégrés au sous-ensemble d'actionnement 20.

Par ailleurs, il est concevable qu'un déclenchement des mécanismes soit provoqué non par une augmentation, mais par une diminution de courant. D'autres procédés de transmission de signaux sont envisageables, tels que des procédés optiques.

Les signes de référence insérés après les caractéristiques techniques mentionnées dans les revendications, ont pour seul but de faciliter la compréhension de ces dernières, et n'en limitent aucunement la portée.

## Revendications

1. Dispositif de sécurité d'un véhicule, comprenant:
- des systèmes de détection (11, 12, 13, 15, 17), donnant des informations sur des conditions d'un trajet du véhicule, lesdits systèmes de détection (11, 12, 13, 15, 17) présentant un premier état, correspondant à des conditions normales du trajet, et un second état, correspondant à un risque pour au moins un passager du véhicule,
- des mécanismes pouvant être activés pour assurer la sécurité dudit passager,
- des systèmes de sécurité (21, 22, 23, 24) capables d'activer lesdits mécanismes, certains au moins desdits systèmes de sécurité (21, 22, 23) comportant des initiateurs pyrotechniques,
- une source (2) d'alimentation électrique,
- un circuit électrique (35) alimenté par la source (2) et relié aux systèmes de détection (11, 12, 13, 15, 17) et de sécurité (21, 22, 23, 24) tel que lorsque certains des systèmes de détection (11, 12, 13, 15, 17) passent du premier au second état, ils déclenchent les systèmes de sécurité (21, 22, 23, 24), lesdits systèmes de sécurité (21, 22, 23, 24) activant lesdits mécanismes,
- une unité de traitement (6) reliée aux systèmes de détection (11, 12, 13, 15, 17) et de sécurité (21, 22, 23, 24) par une interface de communication (8), l'unité de traitement (6) analysant des signaux d'informations en provenance des systèmes de détection (11, 12, 13, 15, 17) et générant des signaux de commande en direction des systèmes de sécurité (21, 22, 23, 24),
- un microgénérateur d'impulsions (9) permettant de générer dans ledit circuit (35) des impulsions électriques précisément calibrées en temps et en amplitude, lesdites impulsions permettant de vérifier la fonctionnalité des initiateurs pyrotechniques,
**caractérisé en ce que** l'un au moins des initiateurs pyrotechniques comprend un pont semi-conducteur (25-28), ledit pont étant isolant lorsqu'une tension appliquée est inférieure à une valeur passante et conducteur si la tension est supérieure à ladite valeur, et ledit initiateur étant déclenché lorsqu'il reçoit une énergie ayant une valeur supérieure à un seuil de fonctionnement, le micro-générateur d'impulsions (9) envoie dans ledit initiateur des impulsions en tension ayant une amplitude au moins égale à la valeur passante, et une durée correspondant à une énergie inférieure au seuil de fonctionnement.

2. Dispositif de sécurité selon la revendication 1,
**caractérisé en ce que** l'unité de traitement (6) comporte une mémoire non volatile, permettant d'enregistrer périodiquement des informations sur la fonctionnalité d'éléments du dispositif de sécurité.

3. Dispositif de sécurité selon la revendication 1 ou 2, **caractérisé en ce que** lesdits mécanismes appartiennent à un ensemble comprenant des coussins gonflables de sécurité frontaux et latéraux, des prétensionneurs de ceinture de sécurité, capables de provoquer une traction des ceintures, des dispositifs de verrouillage et de déverrouillage de portes du véhicule, un coupe-batterie, et un extincteur.

4. Dispositif de sécurité selon l'une quelconque des revendications précédentes, **caractérisé en ce que** lesdits systèmes de détection (11, 12, 13, 15, 17) appartiennent à un ensemble comprenant des accéléromètres (15), un compteur de vitesse (11), des capteurs tactiles (17), des indicateurs de freinage (12), des détecteurs d'incendie et des capteurs indiquant la présence de passagers.

5. Dispositif de sécurité selon l'une quelconque des revendications précédentes, **caractérisé en ce qu'**il comprend un capteur d'accélération (7) redondant avec lesdits systèmes de détection (11, 15, 17), ledit capteur d'accélération (7) étant relié à l'unité de traitement (6) et pouvant confirmer un risque décelé par un au moins desdits systèmes de détection (11, 15, 17).

6. Dispositif de sécurité selon la revendication 5,
**caractérisé en ce que** ledit capteur d'accélération (7) est tridirectionnel.

7. Dispositif de sécurité selon l'une quelconque des revendications précédentes, **caractérisé en ce qu'**il comprend des moyens (7, 11, 15, 17) permettant de détecter des chocs frontaux et latéraux.

8. Dispositif de sécurité selon l'une quelconque des revendications précédentes, **caractérisé en ce que** l'unité de traitement (6) comprend une horloge interne, permettant de vérifier périodiquement les conditions du trajet et de séquencer des déclenchements successifs desdits systèmes de sécurité (21, 22, 23, 24).

## Patentansprüche

1. Sicherheitsvorrichtung für ein Fahrzeug, umfassend:
- Erfassungssysteme (11, 12, 13, 15, 17), die Informationen über Bedingungen einer Strecke des Fahrzeugs liefern, wobei diese Erfassungssysteme (11, 12, 13, 15, 17) einen ersten Zustand, der normalen Streckenbedingungen entspricht, und einen zweiten Zustand, der einer Gefahr für mindestens einen Passagier des Fahrzeugs entspricht, aufweisen,
- Mechanismen, die aktiviert werden können, um die Sicherheit des Passagiers zu gewährleisten,
- Sicherheitssysteme (21, 22, 23, 24), die diese Mechanismen aktivieren können, wobei mindestens gewisse dieser Sicherheitssysteme (21, 22, 23) pyrotechnische Schalter umfassen,
- eine elektrische Versorgungsquelle (2),
- eine elektrische Schaltung (35), die von der Quelle (2) versorgt wird und an die Erfassungssysteme (11, 12, 13, 15, 17) und an die Sicherheitssysteme (21, 22, 23, 24) angeschlossen ist, die derart beschaffen sind, daß, wenn gewisse der Erfassungssysteme (11, 12, 13, 15, 17) von dem ersten in den zweiten Zustand übergehen, diese die Sicherheitssysteme (21, 22, 23, 24) auslösen, wobei diese Sicherheitssysteme (21, 22, 23, 24) die Mechanismen aktivieren,
- eine Bearbeitungseinheit (6), die an die Erfassungssysteme (11, 12, 13, 15, 17) und Sicherheitssysteme (21, 22, 23, 24) durch eine Kommunikationsschnittstelle (8) angeschlossen ist, wobei die Bearbeitungseinheit (6) Informationssignale von den Erfassungssystemen (11, 12, 13, 15 17) analysiert und Steuersignale in Richtung der Sicherheitssysteme (21, 22, 23, 24) erzeugt,
- einen Mikro-Impulsgenerator (9), der es ermöglicht, in der Schaltung (35) elektrische Impulse zu erzeugen, die hinsichtlich Zeit und Amplitude genau kalibriert sind, wobei es diese Impulse ermöglichen, die Funktionalität der pyrotechnischen Schalter zu überprüfen,
**dadurch gekennzeichnet, daß** mindestens einer der pyrotechnischen Schalter eine Halbleiterbrücke (25-28) umfaßt, wobei diese Brücke isolierend ist, wenn eine angelegte Spannung kleiner als ein Durchgangswert ist, und leitend ist, wenn die Spannung größer als dieser Wert ist, wobei der Schalter ausgelöst wird, wenn er eine Energie erhält, die einen größeren Wert als eine Funktionsschwelle hat, der Mikro-Impulsgenerator (9) in diesen Schalter Spannungsimpulse sendet, die eine Amplitude aufweisen, die zumindest gleich dem Durchgangswert ist, und eine Dauer aufweisen, die einer Energie entspricht, die kleiner als die Funktionsschwelle ist.

2. Sicherheitsvorrichtung nach Anspruch 1, **dadurch gekennzeichnet, daß** die Bearbeitungseinheit (6) einen energieunabhängigen Speicher umfaßt, der es ermöglicht, regelmäßig Informationen über die Funktionalität von Elementen der Sicherheitsvorrichtung aufzuzeichnen.

3. Sicherheitsvorrichtung nach Anspruch 1 oder 2, **dadurch gekennzeichnet, daß** die Mechanismen einer Einheit angehören, die aufblasbare vordere und seitliche Sicherheitskissen, Vorspanner für den Sicherheitsgurt, die eine Spannung der Gurte bewirken können, Vorrichtungen zur Verriegelung und Entriegelung der Fahrzeugtüren, einen Batterieunterbrecher und einen Feuerlöscher umfaßt.

4. Sicherheitsvorrichtung nach einem der vorhergehenden Ansprüche, **dadurch gekennzeichnet, daß** die Erfassungssysteme (11, 12, 13, 15, 17) einer Einheit angehören, die Beschleunigungsmesser (15), einen Geschwindigkeits-messer (11), Tastsensoren (17), Bremsanzeigen (12), Brandanzeiger und Sensoren, die die Anwesenheit von Passagieren anzeigen, aufweist.

5. Sicherheitsvorrichtung nach einem der vorhergehenden Ansprüche, **dadurch gekennzeichnet, daß** sie einen Beschleunigungsmesser (7) umfaßt, der mit den Erfassungssystemen (11, 15, 17) redundant ist, wobei der Beschleunigungsmesser (7) mit der Bearbeitungseinheit (6) verbunden ist und eine von mindestens einem der Erfassungssysteme (11, 15, 17) entdeckte Gefahr bestätigen kann.

6. Sicherheitsvorrichtung nach Anspruch 5, **dadurch gekennzeichnet, daß** der Beschleunigungsmesser (7) dreidirektional ist.

7. Sicherheitsvorrichtung nach einem der vorhergehenden Ansprüche, **dadurch gekennzeichnet, daß** er Mittel (7, 11, 15, 17) umfaßt, die es ermöglichen, Vorder- und Seitenaufpralle zu erfassen.

8. Sicherheitsvorrichtung nach einem der vorhergehenden Ansprüche, **dadurch gekennzeichnet, daß** die Bearbeitungseinheit (6) eine innere Uhr umfaßt, die es ermöglicht, regelmäßig die Bedingungen der Strecke zu überprüfen und aufeinanderfolgende Einschaltungen der Sicherheitssysteme (21, 22, 23, 24) in der Abfolge zu steuern.

## Claims

1. Vehicle safety device comprising:
- sensing systems (11, 12, 13, 15, 17) giving data on the conditions of a path of the vehicle, the said sensing systems (11, 12, 13, 15, 17) having a first state, which corresponds to normal path conditions, and a second state, which corresponds to a hazard to at least one passenger of the vehicle,
- mechanisms which can be activated to ensure the safety of the said passenger,
- safety systems (21, 22, 23, 24) capable of activating the said mechanisms, at least some of the said safety systems (21, 22, 23) comprising pyrotechnic initiators,
- a source (2) of electrical power,
- an electric circuit (35) powered by the source (2) and connected to the sensing systems (11, 12, 13, 15, 17) and safety systems (21, 22, 23, 24), such that when some of the sensing systems (11, 12, 13, 15, 17) change from the first state into the second state, they trigger the safety systems (21, 22, 23, 24), the said safety systems (21, 22, 23, 24) activating the said mechanisms,
- a processing unit (6) connected to the sensing systems (11, 12, 13, 15, 17) and safety systems (21, 22, 23, 24) by a communications interface (8), the processing unit (6) analysing data signals from the sensing systems (11, 12, 13, 15, 17) and generating control signals for the safety systems (21, 22, 23, 24),
- a pulse microgenerator (9) making it possible to generate within the said circuit (35) electric pulses which are precisely calibrated in terms of time and in terms of amplitude, the said pulses making it possible to check the serviceability of the pyrotechnic initiators,
**characterized in that** at least one of the pyrotechnic initiators comprises a semiconductor bridge (25-28), the said bridge being off when a voltage applied is lower than an activation value and on if the voltage is higher than the said value, and the said initiator being triggered when it receives energy of a value higher than an operating threshold, the pulse microgenerator (9) sends to the said initiator voltage pulses the amplitude of which is at least equal to the activation value and the duration of which corresponds to an amount of energy that is below the operating threshold.

2. Safety device according to claim 1, **characterized in that** the processing unit (6) comprises a non-volatile memory allowing data regarding the serviceability of elements of the safety device to be recorded periodically.

3. Safety device according to claim 1, **characterized in that** the said mechanisms form part of an assembly comprising frontal and lateral airbags, seat belt pretensioners, capable of applying tension to the belts, devices for locking and unlocking the vehicle doors, a battery cut-off, and an extinguisher.

4. Safety device according to any one of the preceding claims,
**characterized in that** the said sensing systems (11, 12, 13, 15, 17) form part of an assembly comprising accelerometers (15), a speed counter (11), tactile sensors (17), brake indicators (12), fire detectors and sensors that indicate the presence of passengers.

5. Safety device according to any one of the preceding claims,
**characterized in that** it comprises an acceleration sensor (7) which is redondant with the said sensing systems (11, 15, 17), the said acceleration sensor (7) being connected to the processing unit (6) and capable of confirming a hazard revealed by at least one of the said sensing systems (11, 15, 17).

6. Safety device according to claim 5, **characterized in that** the said acceleration sensor (7) is three-directional.

7. Safety device according to any one of the preceding claims,
**characterized in that** it comprises means (7, 11, 15, 17) that can detect frontal and side impacts.

8. Safety device according to any one of the preceding claims,
**characterized in that** the processing unit (6) comprises an internal clock making it possible periodically to validate the path conditions and sequence the successive triggerings of the said safety systems (21, 22, 23, 24).
